# EUROPÄISCHE PATENTSCHRIFT

(11) **EP 2 215 533 B1**
(45) Veröffentlichungstag und Bekanntmachung des Hinweises auf die Patenterteilung: **28.03.2012**
(21) Anmeldenummer: 08802745.3
(22) Anmeldetag: 02.10.2008
(51) Int. Cl.: G05B 9/03, G05B 19/042, F16P 3/00, G06F 1/24, G06F 1/28

(54) **STEUEREINRICHTUNG FÜR EINE SICHERHEITSSCHALTVORRICHTUNG MIT INTEGRIERTER ÜBERWACHUNG DER VERSORGUNGSSPANNUNG**
CONTROL DEVICE FOR A SAFETY SWITCHING APPARATUS WITH INTEGRATED MONITORING OF THE SUPPLY VOLTAGE
DISPOSITIF DE COMMANDE POUR UN SYSTÈME DE COMMUTATION DE SÉCURITÉ À SURVEILLANCE INTÉGRÉE DE LA TENSION D'ALIMENTATION

(30) Priorität: 26.10.2007 DE 102007052512
(43) Veröffentlichungstag der Anmeldung: 11.08.2010
(73) Patentinhaber: Pilz GmbH & Co. KG, 73760 Ostfildern (DE)
(72) Erfinder: ZINSER, Christoph, 72649 Wolfschlugen (DE)
(74) Vertreter: Witte, Weller & Partner
(86) Internationale Anmeldenummer: PCT/EP2008/008338
(87) Internationale Veröffentlichungsnummer: WO 2009/052926

(56) Entgegenhaltungen:
- EP-A- 0 525 574
- WO-A-88/05569
- DE-A1- 4 427 759
- DE-B3-102005 034 161
- GB-A- 2 323 224
- US-A- 4 621 327
- US-A1- 2004 117 079
- US-A1- 2004 193 365
- US-A1- 2006 149 465
- US-A1- 2006 167 601

## Beschreibung

Die Erfindung betrifft eine Steuereinrichtung für eine Sicherheitsschaltvorrichtung und eine Sicherheitsschaltvorrichtung mit einer derartigen Steuereinrichtung. Die Erfindung betrifft außerdem die Verwendung einer derartigen Steuereinrichtung zum Steuern einer Sicherheitsschaltvorrichtung und ein Verfahren zum Steuern einer Sicherheitsschaltvorrichtung.

Eine Steuereinrichtung und ein Verfahren nach den Oberbegriffen der Ansprüche 1 und 11 sind aus EP 0 525 574 A2 bekannt.

Eine Sicherheitsschaltvorrichtung im Sinne der vorliegenden Erfindung ist jede Schaltvorrichtung, die zumindest die Kategorie 3, bevorzugt sogar die Kategorie 4, der europäischen Norm EN 954-1 oder einer vergleichbaren Sicherheitsnorm erfüllt. Hierunter fallen insbesondere Schaltgeräte, Sicherheitssteuerungen sowie Sensor- und Aktormodule, die für die Steuerung und Durchführung von sicherheitskritischen Aufgaben im Bereich industrieller Produktionsumgebungen eingesetzt werden.

Dabei sind insbesondere Schaltgeräte bekannt, die die Betriebsstellung eines Betätigungstasters, eines Not-Aus-Schalters, einer Schutztür oder eines beliebigen anderen Meldegeräts überwachen und in Abhängigkeit davon eine Maschine oder einen Maschinenbereich abschalten bzw. die Möglichkeit zum Einschalten freigeben.

Eine Anwendung einer solchen Sicherheitsschaltvorrichtung ist beispielsweise bei einem Zweihandschaltgerät gegeben. Die Aufgabe eines solches Geräts liegt regelmäßig darin, die Aktivierung einer Maschine oder eines Maschinenbereichs nur dann zuzulassen, wenn der Bediener zwei Taster niederdrückt. Die Taster sind dabei derart angeordnet, beispielsweise indem sie geeignet voneinander beabstandet sind, dass die Betätigung die linke und die rechte Hand des Bedieners erfordert. Dadurch soll verhindert werden, dass der Bediener die Maschine aktiviert, während sich eine seiner Hände noch im Gefahrenbereich der Maschine befindet. DE 44 27 759 A1 offenbart eine solche Sicherheitsschaltvorrichtung.

Ein Versagen derartiger Sicherheitsschaltvorrichtungen kann für das Maschinenbedienpersonal lebensgefährliche Folgen haben, weshalb Sicherheitsschaltvorrichtungen üblicherweise nur verwendet werden, wenn sie durch die zuständigen Aufsichtsbehörden (in Deutschland beispielsweise die Berufsgenossenschaften) zugelassen sind. Eine solche Zulassung erfolgt erst, wenn eine geforderte Fehlersicherheit durch Tests bestätigt worden ist.

Zu den üblichen Anforderungen zählt, dass die Sicherheitsschaltvorrichtung bei einem Fehler die daran angeschlossene Maschine oder den angeschlossenen Maschinenbereich in einen sicheren Zustand schaltet. Dabei muss die Sicherheitsschaltvorrichtung nicht nur Fehler von außen, sondern auch Fehler innerhalb der Sicherheitsschaltvorrichtung selbst erkennen und darauf entsprechend reagieren. Tritt beispielsweise ein Defekt in der Sicherheitsschaltvorrichtung auf, zum Beispiel weil ein Schaltelement permanent durchgeschaltet ist, oder weil ein Teil einer Überwachungsfunktion ausgefallen ist, zum Beispiel weil ein Sensor aufgrund eines Leitungsdefekts kein Signal mehr liefert, muss die Sicherheitsschaltvorrichtung mit einem sicheren Abschalten darauf reagieren bzw. ein Einschalten der Maschine verhindern.

Um die hohen Sicherheitsanforderungen an eine Sicherheitsschaltvorrichtung zu erfüllen, ist es bekannt, zwei Steuereinheiten zu verwenden, zum Beispiel Mikrokontroller, Mikroprozessoren, ASICs, FPGAs, CPLDs, etc., die den Kern einer Steuereinrichtung für die Sicherheitsschaltvorrichtung darstellen. Dabei nimmt jede Steuereinheit Steuer- bzw. Überwachungsaufgaben wahr, insbesondere sogar identische Steuer- bzw. Überwachungsaufgaben. Dabei überwachen die Steuereinheiten sich gegenseitig, indem sie über einen Kommunikationskanal miteinander kommunizieren. Die eingangs genannte EP 0 525 574 A2 beschreibt eine solche Vorrichtung für eine Verwendung in einem Kraftfahrzeug.

Auf diese Weise ist es möglich, dass eine Steuereinheit ihre eigene Funktionalität überprüft, den Zustand der anderen Steuereinheit überprüft und eine Gleichheit von Resultaten beim Ausführen der Steuer- bzw. Überwachungsfunktionen zwischen den beiden Steuereinheiten überprüft. Fällt eine dieser Überprüfungen negativ aus, so schaltet die Sicherheitsschaltvorrichtung die angeschlossene Maschine in einen sicheren Zustand, beispielsweise indem sie Relais im Strompfad der Spannungsversorgung der Maschine öffnet, und verhindert ein erneutes Einschalten der Maschine bis alle Überprüfungen wieder positiv sind.

Im Vergleich zu Sicherheitsschaltvorrichtungen, die mit einfachen diskreten Bauelementen, wie zum Beispiel Widerständen, Kondensatoren, FETs, Relais, etc., aufgebaut sind, bieten Sicherheitsschaltvorrichtungen mit elektronischen Bauteilen eine erhöhte Flexibilität mit einer guten Konfigurierbarkeit. Die vergleichsweise hohe Komplexität wirft jedoch neue Aspekte im Hinblick auf die Fehlersicherheit auf.

Elektronische Schaltungen reagieren in der Regel sehr empfindlich auf Unterspannungen, die von einem temporären Spannungseinbruch (brown-out) bis zu einem permanenten Spannungsausfall (black-out) reichen können.

Der Zustand einer elektronischen Steuereinheit nach dem Ende eines Spannungswegfalls ist in aller Regel gut bekannt, da das Wiederkehren der Spannung nach einem Spannungswegfall im Wesentlichen einem Einschalten der Steuereinheit entspricht. Handelt es sich hingegen um einen Spannungseinbruch, so ist der Zustand einer elektronischen Steuereinheit nach dem Wiederkehren der Spannung in aller Regel unbekannt. So kann die Steuereinheit den Spannungseinbruch ohne jede abnormale Reaktion durchlaufen haben, die Steuereinheit kann weiterarbeiten, hat jedoch falsch gesetzte Variablen oder hat Schritte im vordefinierten Ablauf übersprungen, oder sie befindet sich in einem Zustand, in dem ein Abarbeiten von vorgegebenen Schritten gar nicht mehr erfolgt.

Damit auch nach einem temporären Spannungseinbruch sichergestellt werden kann, dass die Steuereinrichtung für die Sicherheitsschaltvorrichtung, also insbesondere die Steuereinheiten, in einem definierten, bekannten Zustand sind, zu dem bevorzugt auch eine Synchronisation der Steuereinheiten gehört, kann eine Versorgungsspannung der Steuereinheiten von einem zentralen Bauteil (Master-Bauteil) überwacht werden. Aus diesem Bauteil sind Steuerleitungen herausgeführt, die an Eingänge der Steuereinheiten geführt sind, bei deren Aktivierung sich die Steuereinheiten zurücksetzen und in einen definierten Zustand überführen lassen. Dafür bietet sich in aller Regel ein Reset-Eingang der jeweiligen Steuereinheit an.

Sobald das zusätzliche Bauteil einen Abfall der Versorgungsspannung detektiert, der zumindest bei einer der Steuereinheiten zu einem undefinierten Zustand führen könnte, sendet es Signale an die genannten (Reset-)Eingänge der Steuereinheiten, um diese zurückzusetzen. Überschreitet die Versorgungsspannung danach eine bestimmte Mindestspannungsschwelle, bei der sicher davon ausgegangen werden kann, dass sie für die korrekte Funktion der Steuereinheiten ausreicht, beendet das Bauteil das Senden des Signals, und die Steuereinheiten gehen - ggf. nach einer Initialisierungsphase - in einen definierten Aktivzustand über. Auf diese Weise kann sichergestellt werden, dass alle Steuereinheiten nach einem Spannungseinbruch wieder in einen definierten Aktivzustand gelangen.

Um aber die hohen Sicherheitsanforderungen bezüglich des Gesamtsystems, d.h. bezüglich der Steuereinheiten plus dem zusätzlichen Bauteil, zu erfüllen, muss auch eine sichere Funktion des zusätzlichen Bauteils gewährleistet sein. Dies führt dazu, dass zusätzliche Steuer- und Überwachungsmechanismen implementiert werden müssen. Ferner stellt das zusätzliche Bauteil eine weitere Fehlerquelle dar, die die Fehleranfälligkeit der Steuereinrichtung erhöht und zu zusätzlichen Kosten und zusätzlichem Platzbedarf führt.

Vor diesem Hintergrund ist es eine Aufgabe der vorliegenden Erfindung, eine verbesserte, kostengünstige Steuereinrichtung für eine Sicherheitsschaltvorrichtung, eine Sicherheitsschaltvorrichtung, die Verwendung einer Steuereinrichtung zum Steuern einer Sicherheitsschaltvorrichtung, sowie ein Verfahren zum Steuern einer Sicherheitsschaltvorrichtung aufzuzeigen. Dabei soll insbesondere bei zumindest vergleichbarer Sicherheit auch eine geringere Ausfallwahrscheinlichkeit erzielt werden.

Diese Aufgabe wird gelöst durch eine Steuereinrichtung für eine Sicherheitsschaltvorrichtung, mit einer ersten Steuereinheit und einer zweiten Steuereinheit, die jeweils entsprechend mit einer ersten Versorgungsspannung und mit einer zweiten Versorgungsspannung elektrisch verbunden sind und dafür ausgebildet sind, über mindestens einen Kommunikationskanal miteinander zu kommunizieren, wobei die erste Versorgungsspannung und die zweite Versorgungsspannung von einer gemeinsamen Ursprungsspannung abgeleitet sind, wobei die erste Steuereinheit dafür ausgebildet ist, in einen Aktivzustand zu gehen, wenn die erste Versorgungsspannung eine erste Mindestspannungsschwelle überschreitet, und wobei die zweite Steuereinheit dafür ausgebildet ist, in einen Aktivzustand zu gehen, wenn die zweite Versorgungsspannung eine zweite Mindestspannungsschwelle überschreitet, wobei die zweite Mindestspannungsschwelle kleiner ist als die erste Mindestspannungsschwelle und wobei die erste Steuereinheit dafür ausgebildet ist, nach dem Überschreiten der ersten Mindestspannungsschwelle die zweite Steuereinheit zurückzusetzen.

Die Aufgabe wird ferner gelöst durch eine Sicherheitsschaltvorrichtung mit einer zuvor beschriebenen Steuereinrichtung und auch durch eine Verwendung einer zuvor beschriebenen Steuereinrichtung zum Steuern einer Sicherheitsschaltvorrichtung.

Schließlich wird die Aufgabe auch gelöst durch ein Verfahren zum Steuern einer Sicherheitsschaltvorrichtung, mit den folgenden Schritten:
- Bereitstellen einer ersten und einer zweiten Steuereinheit, die jeweils entsprechend mit einer ersten Versorgungsspannung und mit einer zweiten Versorgungsspannung elektrisch verbunden sind und dafür ausgebildet sind, über mindestens einen Kommunikationskanal miteinander zu kommunizieren, wobei die erste Versorgungsspannung und die zweite Versorgungsspannung von einer gemeinsamen Ursprungsspannung abgeleitet sind,
- in Abhängigkeit von der Versorgungsspannung,
   a) Einstellen eines Aktivzustands bei der ersten Steuereinheit, wenn die ersten Versorgungsspannung eine erste Mindestspannungsschwelle überschreitet, und
   b) Einstellen eines Aktivzustands bei der zweiten Steuereinheit, wenn die zweite Versorgungsspannung eine zweite Mindestspannungsschwelle überschreitet, wobei die zweite Mindestspannungsschwelle kleiner ist als die erste Mindestspannungsschwelle, und
- Zurücksetzen der zweiten Steuereinheit durch die erste Steuereinheit, nachdem die erste Mindestspannungsschwelle überschritten wurde.

Die Erfindung zeigt auf, dass es auch bei einem Konzept von gleichberechtigten Steuereinheiten möglich ist, für bestimmte Funktionen auf einfache Weise ein Master-Bauteil zu definieren, das den ordnungsgemäßen Arbeitszustand aller Steuereinheiten sicherstellt und dabei gleichzeitig als "nur" gleichberechtigter Steuer- und Überwachungsteil neben der anderen Steuereinheit bzw. neben den anderen Steuereinheiten steht. Gleichzeitig wird eine definierte Synchronisation zwischen den Steuereinheiten erreicht.

Um dies zu erzielen, wird unter anderem eine Mindestspannungsschwelle für die erste Steuereinheit eingestellt, die oberhalb der zweiten Mindestspannungsschwelle der zweiten Steuereinheit - und ggf. weiterer Steuereinheiten - liegt. Die Mindestspannungsschwellen können dabei auf die Werte eingestellt werden, ab denen tatsächlich, bezogen auf die technische Realisierung, eine Funktion der Steuereinheiten überhaupt erst möglich ist.

Die Mindestspannungsschwellen können aber auch oberhalb des technisch mindestens erforderlichen Spannungswerts gewählt werden. In diesem Fall könnte zwar auch unterhalb der Mindestspannungsschwelle eine zuverlässige Funktion der entsprechenden Steuereinheit gegeben sein, doch zeigt die jeweilige Steuereinheit bei diesem Wert ihrer jeweiligen Versorgungsspannung noch nicht den Aktivzustand an. Bevorzugt wird dies dadurch erreicht, dass die Steuereinheit trotz Vorhandensein der technisch mindestens erforderlichen Spannung nicht in den Aktivzustand geschaltet wird oder dass die Steuereinheit den Aktivzustand nicht nach außen anzeigt. Wird dann die jeweilige Mindestspannungsschwelle überschritten, wird die Steuereinheit in einen Aktivzustand geschaltet und der Aktivzustand nach außen, insbesondere über ein logisches Signal an einem Ausgangspin, signalisiert.

Eine Besonderheit, die sich dadurch ergibt, dass die erste Mindestspannungsschwelle größer gewählt ist als die zweite Mindestspannungsschwelle, soll nun erläutert werden. Für diese Erläuterung sei angenommen, dass beide Versorgungsspannungen gleich einer gemeinsamen Versorgungsspannung sind und dass sich die Versorgungsspannung aufgrund eines Spannungseinbruchs unterhalb der zweiten Mindestspannungsschwelle befindet und wieder auf die Nennspannung ansteigt. Anfänglich befindet sich keine der Steuereinheiten im Aktivzustand. Unter dem Aktivzustand soll ein solcher Zustand der Steuereinheit verstanden werden, in der sie - ggf. nach einer Initialisierungsphase - die regulär vorgesehenen Steuer- bzw. Überwachungsfunktionen durchführt.

Sobald die gemeinsame Versorgungsspannung die zweite Mindestspannungsschwelle überschreitet, wird die zweite Steuereinheit in einen Aktivzustand gehen. Eine Aktivität der Steuereinrichtung oder der Sicherheitsschaltvorrichtung insgesamt liegt aber noch nicht vor, da die erste Steuereinheit noch in einem Inaktivzustand verweilt.

Steigt die gemeinsame Versorgungsspannung nun weiter an und überschreitet die erste Mindestspannungsschwelle, so geht die erste Steuereinheit in einen Aktivzustand. Während der Übergang in den Aktivzustand stattfindet oder nachdem der Aktivzustand erreicht wurde, steuert die erste Steuereinheit die zweite Steuereinheit so an, dass die zweite Steuereinheit zurückgesetzt wird. D.h., unabhängig davon, welcher Zustand bei der zweiten Steuereinheit aktuell vorgelegen hat, wird die zweite Steuereinheit zurückgesetzt, insbesondere ein Reset durchgeführt.

Da die zweite Mindestspannungsschwelle unterhalb der ersten Mindestspannungsschwelle liegt, wird mit dem Zurücksetzen der zweiten Steuereinheit in jedem Fall ein definierter, bekannter Zustand in der zweiten Steuereinheit bewirkt, da eine gemeinsame Versorgungsspannung oberhalb der ersten Mindestspannungsschwelle an der zweiten Steuereinheit sicher ausreicht, um die ordnungsgemäße Funktion der zweiten Steuereinheit sicherzustellen. Da die erste Steuereinheit bereits aktiv ist, kann auch die gewünschte Synchronisation mit der zweiten Steuereinheit herbeigeführt werden.

Dieses Vorgehen wird auch dann durchgeführt, wenn die gemeinsame Versorgungsspannung von einem Spannungswert ansteigt, der oberhalb der zweiten Mindestspannungsschwelle und unterhalb der ersten Mindestspannungsschwelle liegt. Durch das Zurücksetzen der zweiten Steuereinheit und ggf. weiterer Steuereinheiten wird auch bei dieser Konstellation erreicht, dass sich die zweite Steuereinheit in einem definierten, bekannten Zustand befindet. Demnach erfolgt das Zurücksetzen auch dann, wenn die zweite Steuereinheit tatsächlich nie den Aktivzustand verlassen hat und nie in einen abnormalen Zustand geraten ist.

Es sei darauf hingewiesen, dass auch eine Überwachung dahingehend vorgesehen werden kann, beispielsweise durch eine Abfrage an einem Statuspin der zweiten Steuereinheit, dass das Zurücksetzen nicht durchgeführt wird, wenn die zweite Steuereinheit den ordnungsgemäßen Aktivzustand nie verlassen hat. Es wird derzeit jedoch davon ausgegangen, dass eine solche Lösung aufgrund der etwas erhöhten Komplexität und des Vorrangs des Sicherheitsaspekts, bei einer Gesamtbetrachtung hinter der zuvor beschriebenen Grundidee zurücksteht.

Die Erfindung lässt sich insbesondere dort vorteilhaft einsetzen, wo die Steuereinheiten auf eine definierte Synchronisation zueinander angewiesen sind. Dies ist beispielsweise der Fall, wenn die erste Steuereinheit nach dem Starten der zweiten Steuereinheit auf diese wartet, um eine Synchronisation durchzuführen, die Voraussetzung für eine Aktivität der Steuereinrichtung bzw. der Sicherheitsschaltvorrichtung ist. Außerdem ist es bevorzugt, wenn als Steuereinheiten moderne Mikrokontroller mit Power-ON-Reset (POR) verwendet werden, wie zum Beispiel ein AVR 8-Bit RISC ATmega16 der Atmel Corporation.

Die erste und die zweite Versorgungsspannung können auf zwei verschiedene Werte eingestellt sein. Sie sind aber nicht völlig unabhängig voneinander, sondern leiten sich aus einer Ursprungsspannung ab, sind also vom Verlauf der Ursprungsspannung abhängig. Die Ursprungsspannung wird insbesondere auf ein Netzteil gegeben, das die erste und die zweite Versorgungsspannung erzeugt. Ferner handelt es sich bei der Ursprungsspannung bevorzugt um eine Netzspannung oder um eine Spannung, die durch Transformation aus der Netzspannung erzeugt wurde.

Damit ist die oben genannte Aufgabe vollständig gelöst.

Bei einer Ausgestaltung der Erfindung ist die erste Steuereinheit dafür ausgebildet, in einen Inaktivzustand zu gehen, wenn die erste Versorgungsspannung eine erste Unterspannungsschwelle unterschreitet.

Dies bietet den Vorteil, dass die erste Steuereinheit in einen definierten, bekannten Inaktivzustand geht und sich nicht bei einem Unterschreiten der technisch mindestens erforderlichen ersten Versorgungsspannung unkontrolliert Aussetzer und Fehlfunktionen einstellen. Dabei ist es vorteilhaft, wenn der Inaktivzustand der ersten Steuereinheit nach außen hin signalisiert wird, denn hinsichtlich des Sicherheitsaspekts ist es bevorzugt, wenn die erste Steuereinheit - sei es auch nur kurz - ihren Inaktivzustand anzeigt, als die Detektion des Inaktivzustands den anderen Komponenten der Steuereinrichtung zu überlassen.

Eine Realisierung einer solchen Unterspannungsschwelle kann besonders gut mittels moderner Mikrokontroller erfolgen, wie dem zuvor genannten ATmega16, die über einen einstellbaren Schwellwert für den Spannungseinbruch (brown-out-detectionlevel) verfügen. Dabei wird bevorzugt bei Unterschreiten der Unterspannungsschwelle ein Reset in der ersten Steuereinheit eingeleitet, der erst bei Überschreiten der ersten Mindestspannungsschwelle zum Abschluss kommt. Es sei darauf hingewiesen, dass auch die zweite Steuereinheit entsprechend ausgebildet sein kann, dass sie nämlich in einen Inaktivzustand geht, wenn die zweite Versorgungsspannung eine zweite Unterspannungsschwelle unterschreitet.

Bei einer weiteren Ausgestaltung der Erfindung ist die erste Unterspannungsschwelle gleich der ersten Mindestspannungsschwelle.

Wenngleich es möglich ist, durch unterschiedliche Wahl von Mindestspannungsschwelle und Unterspannungsschwelle eine Hysterese zu realisieren, die ein schnelles Wechseln zwischen Aktiv- und Inaktivzustand unterdrücken kann, ergibt sich durch die vorgeschlagene Ausführungsform eine besonders einfache Realisierung. Für die erste Steuereinheit bedeutet dies, dass sich nach dem Unterschreiten der Mindestspannungsschwelle der Inaktivzustand einstellt, und dass sich nach dem Überschreiten der Mindestspannungsschwelle der Aktivzustand einstellt, wobei auch das zuvor beschriebene Zurücksetzen der zweiten Steuereinheit erfolgt. Es sei darauf hingewiesen, dass auch für die zweite Steuereinheit die zweite Mindestspannungsschwelle gleich einer zweiten Unterspannungsschwelle gewählt werden kann.

Bei einer weiteren Ausgestaltung der Erfindung weist die erste Steuereinheit einen ersten Reset-Eingang auf, der mit der ersten Versorgungsspannung elektrisch verbunden ist.

Dies ermöglicht eine besonders einfache Überwachung der Mindestspannungsschwelle und ggf. auch der Unterspannungsschwelle. Dabei ist es insbesondere bevorzugt, wenn die Abfrage der Mindestspannungsschwelle innerhalb der ersten Steuereinheit geschieht und dann auch gleich zur jeweiligen Reaktion der ersten Steuereinheit bei Unter- bzw. Überschreiten der Mindestspannungsschwelle führt.

Bei einer weiteren Ausgestaltung der Erfindung weist die zweite Steuereinheit einen zweiten Reset-Eingang auf, weist die erste Steuereinheit einen ersten Reset-Ausgang auf und ist der zweite Reset-Eingang mit dem ersten Reset-Ausgang elektrisch verbunden.

So wird auf besonders einfache Weise ermöglicht, dass die erste Steuereinheit die zweite Steuereinheit zurücksetzen kann. Als Reset-Ausgang der ersten Steuereinheit kann ein herkömmlicher Pin der ersten Steuereinheit, der bevorzugt unbelegt ist, verwendet werden, sofern er einen Pegel signalisieren kann, der am zweiten Reset-Eingang als Impuls für einen Reset interpretiert werden kann. Dabei kann der zweite Reset-Eingang bevorzugt sowohl pegelgesteuert als auch flankengesteuert sein. Wenn der zweite Reset-Eingang einen niedrigen Eingangspegel als Reset-Impuls versteht, ist es bevorzugt, wenn der Reset-Ausgang kurzzeitig als Stromsenke wirken kann.

Bei einer weiteren Ausgestaltung der Erfindung ist der zweite Reset-Eingang mit der zweiten Versorgungsspannung elektrisch verbunden.

Auf diese Weise kann erzielt werden, dass der zweite Reset-Eingang sowohl einen Abfall der zweiten Versorgungsspannung unter die zweite Unterspannungsschwelle bzw. die zweite Mindestspannungsschwelle als auch ein Signal mit einem niedrigen Pegel von der ersten Steuereinheit als Impuls zum Auslösen eines Resets interpretiert.

Wie nachfolgend noch anhand eines Ausführungsbeispiels gezeigt wird, ist die Steuereinrichtung dann besonders einfach zu realisieren.

Bei einer weiteren Ausgestaltung der Erfindung ist der zweite Reset-Eingang zwischen ein erstes Element, das wie ein Widerstand wirkt, und ein zweites Element, das wie ein Kondensator wirkt, geschaltet, wobei das erste Element und das zweite Element in Reihe zwischen der zweiten Versorgungsspannung und einem Massepotential angeordnet sind.

Dies ermöglicht insgesamt einen besondern einfachen Aufbau, da sich die vorgeschlagene Steuereinrichtung dann mit einfachen, kostengünstigen Bauteilen realisieren lässt.

Bei einer weiteren Ausgestaltung der Erfindung ist die erste Versorgungsspannung gleich der zweiten Versorgungsspannung.

Dadurch lässt sich ein einfacher Aufbau realisieren. Außerdem ist das Festlegen der Mindestspannungsschwellen dann leicht vorzunehmen. Die erste und die zweite Versorgungsspannung werden dann von einer gemeinsamen Versorgungsspannung gespeist, die dann insbesondere gleich der Ursprungsspannung sein kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Figur 1: einen allgemeinen Aufbau einer Maschine, die an eine Sicherheitsschaltvorrichtung mit einer erfindungsgemäßen Steuereinrichtung angeschlossen ist;
- Figur 2: eine Steuereinrichtung gemäß der vorliegenden Erfindung;
- Figur 3: ein Verfahren zum Steuern einer Sicherheitsschaltvorrichtung; und
- Figur 4: ein beispielhaftes Diagramm, das die Funktion der erfindungsgemäßen Steuereinrichtung über der Zeit darstellt.

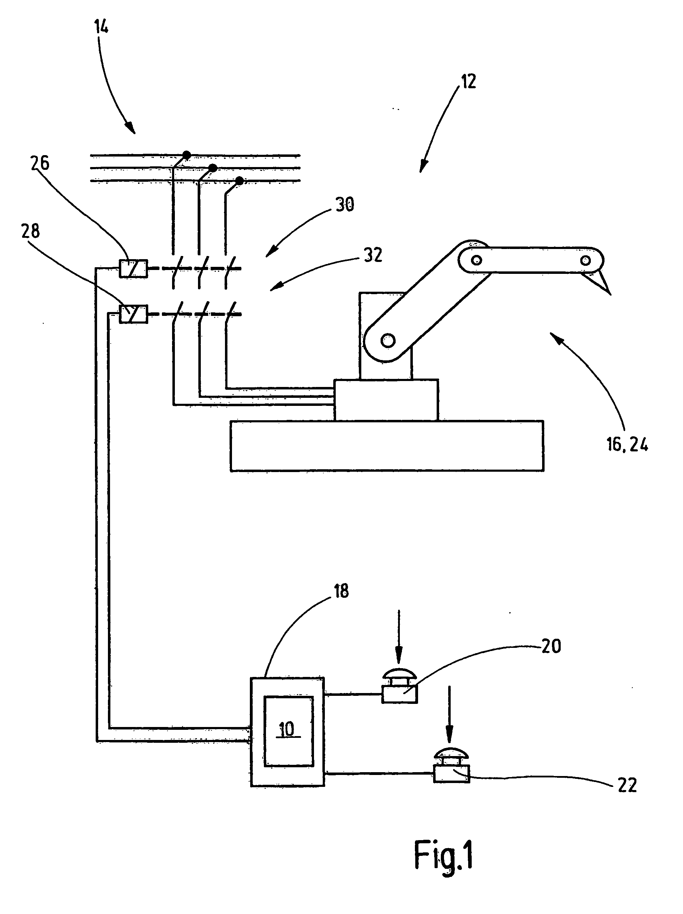

In Figur 1 ist ein Aufbau mit der vorgeschlagenen Steuereinrichtung 10 in seiner Gesamtheit mit der Bezugsziffer 12 bezeichnet. Der Aufbau 12 beinhaltet hier eine Stromversorgung 14, eine Maschine 16 und eine Sicherheitsschaltvorrichtung 18, die die Steuereinrichtung 10 aufweist und an die ein erstes Meldegerät 20 und ein zweites Meldegerät 22 angeschlossen sind.

Die Maschine 16 ist ein Verbraucher 24, der nur dann für einen Arbeitsvorgang eingeschaltet werden darf, wenn die Zeitspanne zwischen einer Betätigung des ersten Meldeelements 20 und einer Betätigung des zweiten Meldeelements 22 unterhalb einer vorgegebenen Höchstzeitdauer liegt, die von der Steuereinrichtung 10 überwacht wird.

Zum Einschalten der Maschine 16 steuert die Sicherheitsschaltvorrichtung 18 zwei Schütze 26, 28 an, deren Arbeitskontakte 30, 32 in der Verbindung zwischen der Stromversorgung 14 und der Maschine 16 angeordnet sind. Die Maschine 16 kann den Arbeitsvorgang nur dann durchführen, wenn beide Schütze 26, 28 ihre Arbeitskontakte 30, 32 schließen.

Wird von der Steuereinrichtung 10 vor oder während der Betätigung der Meldeelemente 20, 22 ein Fehler erkannt, so zieht mindestens eines der Schütze 26, 28 nicht an. Dadurch bleibt die Maschine 16 stromlos. Wird nach dem Durchschalten der Arbeitskontakte 30, 32 ein Fehler erkannt, so kann die Stromversorgung der Maschine 16 durch das Abfallen mindestens eines der Schütze 26, 28 abgeschaltet werden.

Die Steuereinrichtung 10 bestimmt wesentlich die ordnungsgemäße Funktion der Sicherheitsschaltvorrichtung 18. Nachfolgend wird ein bevorzugtes Ausführungsbeispiel der Steuereinrichtung 10 beschrieben.

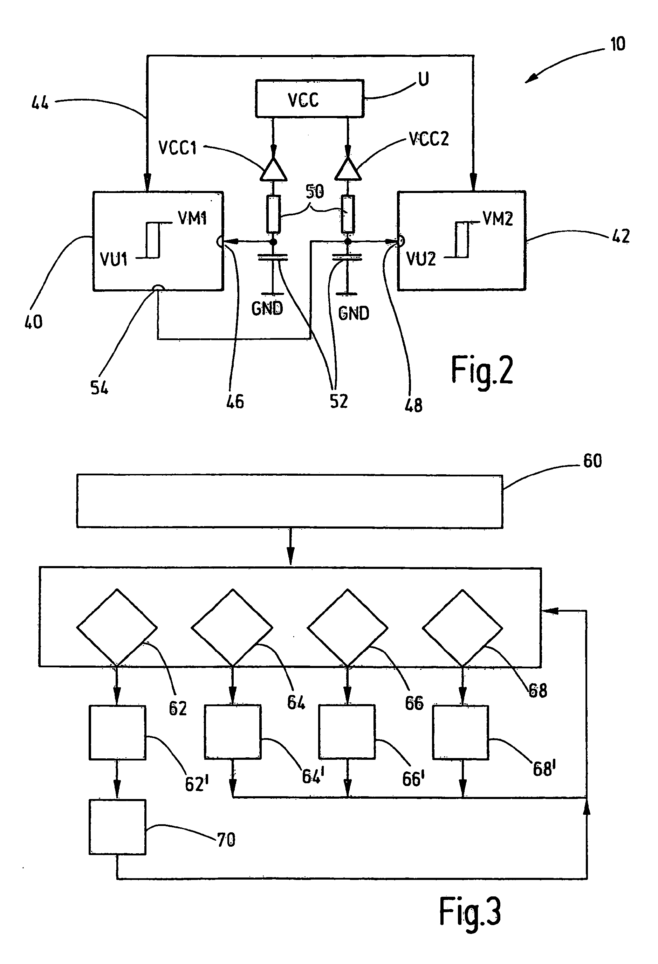

Figur 2 zeigt eine Ausführungsform der Steuereinrichtung 10. Die Steuereinrichtung 10 weist eine erste Steuereinheit 40 und eine zweite Steuereinheit 42 auf. Beide Steuereinheiten 40, 42 sind jeweils entsprechend mit einer ersten Versorgungsspannung VCC1 und mit einer zweiten Versorgungsspannung VCC2 verbunden, die hier gleich einer gemeinsamen Versorgungsspannung VCC sind. Es gilt hier also VCC1 = VCC2 = VCC. Die gemeinsame Versorgungsspannung VCC ist hier die Ursprungsspannung U, es gilt also VCC = U.

Des Weiteren weist die Steuereinrichtung 10 einen Kommunikationskanal 44 auf, der beispielsweise als eine oder mehrere direkte Verbindungen oder über einen Bus realisiert ist, über den die Steuereinheiten 40, 42 miteinander kommunizieren. Die erste Steuereinheit 40 weist eine erste Mindestspannungsschwelle VM1 und eine erste Unterspannungsschwelle VU1 auf.

Die zweite Steuereinheit weist 42 eine zweite Mindestspannungsschwelle VM2 und eine zweite Unterspannungsschwelle VU2 auf.

Wie symbolisch angedeutet ist, werden diese Spannungen verwendet, um jeweils eine Hysterese zu realisieren. Für die Realisierung der Erfindung kann aber auch VM 1 = VM 1 und/oder VM2 = VU2 gewählt werden.

Die erste Steuereinheit 40 ist dafür ausgebildet, in einen Aktivzustand zu gehen, wenn die gemeinsame Versorgungsspannung VCC die erste Mindestspannungsschwelle VM1 überschreitet. Außerdem ist die erste Steuereinheit 40 dazu ausgebildet, in einen Inaktivzustand zu gehen, wenn die gemeinsame Versorgungsspannung VCC die erste Unterspannungsschwelle VU1 unterschreitet. In entsprechender Weise ist die zweite Steuereinheit 42 dafür ausgebildet, in einen Aktivzustand zu gehen, wenn die gemeinsame Versorgungsspannung VCC die zweite Mindestspannungsschwelle VM2 überschreitet und in einen Inaktivzustand zu gehen, wenn die gemeinsame Versorgungsspannung VCC die zweite Unterspannungsschwelle VU2 unterschreitet. Die erste Mindestspannungsschwelle VM1 ist größer gewählt als die zweite Mindestspannungsschwelle VM2. Die entsprechenden Unterspannungsschwellen VU1, VU2 werden insbesondere kleiner als die Mindestspannungsschwellen VM1, VM2 gewählt.

Die erste Steuereinheit 40 weist einen ersten Reset-Eingang 46 auf, und die zweite Steuereinheit 42 weist einen zweiten Reset-Eingang 48 auf. Die Reset-Eingänge 46, 48 sind jeweils mit einem Mittenabgriff einer Reihenschaltung aus einem ersten Element 50, das wie ein Widerstand wirkt, hier einfach als Widerstand ausgeführt, und einem zweiten Element 52, das wie ein Kondensator wirkt, hier einfach als Kondensator ausgeführt, angeschlossen. Das erste Element 50 und das zweite Element 52 sind in Reihe zwischen der gemeinsamen Versorgungsspannung VCC und einem Massepotential GND angeordnet.

Die erste Steuereinheit 40 weist ferner einen Reset-Ausgang 54 auf, der mit dem zweiten Reset-Eingang 48 elektrisch verbunden ist.

Für die nachfolgenden Betrachtungen sei angenommen, dass die Mindestspannungsschwellen VM1, VM2 jeweils gleich den entsprechenden Unterspannungsschwellen VU1, VU2 sind. Fällt die gemeinsame Versorgungsspannung VCC unter die erste Mindestspannungsschwelle VM1, so geht die erste Steuereinheit 40 in einen Inaktivzustand über. Der Inaktivzustand zeigt an, dass sich die erste Steuereinheit 40 nicht im ordnungsgemäßen Aktivzustand befindet. Der Inaktivzustand kann beispielsweise ein Abschalten oder ein Anhalten der Steuereinheiten 40, 42 bedeuten. Der Inaktivzustand kann ferner aber auch als Warteschleife oder Reset-Schleife realisiert sein. Schließlich ist es auch denkbar, dass der Inaktivzustand aus Sicherheitsgründen eine Inaktivität anzeigt, obwohl aus technischer Sicht vielleicht (noch) keine Beeinträchtigung der Funktion vorliegt.

Überschreitet die gemeinsame Versorgungsspannung VCC anschließend wieder die erste Mindestspannungsschwelle VM1, so geht die erste Steuereinheit 40 in den ordnungsgemäßen Aktivzustand über. Bevorzugt erkennt die zweite Steuereinheit 42 dies anhand eines Aktivitätssignals, welches sie über den Kommunikationskanal 44 erhält. Die für die erste Steuereinheit 40 geschilderte Funktionalität liegt auch bei der zweiten Steuereinheit 42 bezogen auf die zweite Mindestspannungsschwelle VM2 vor.

Die besondere Funktion der ersten Steuereinheit 40 liegt nun darin, dass sie nach dem Überschreiten der ersten Mindestspannungsschwelle VM1 ein Signal über den Reset-Ausgang 54 an den zweiten Reset-Eingang 48 sendet. Bei diesem Ausführungsbeispiel stellt der Reset-Ausgang in diesem Fall zumindest kurzzeitig eine Stromsenke dar, so dass die Spannung am zweiten Reset-Eingang 48 zumindest kurzzeitig abfällt und so ein Reset-Impuls für die zweite Steuereinheit 42 generiert wird. Anschließend geht die zweite Steuereinheit 42 in ihren Aktivzustand über, in dem sie - ggf. nach einer Initialisierungsphase - ihre Steuer- bzw. Überwachungsfunktion ausübt. Da die zweite Mindestspannungsschwelle VM2 kleiner ist als die erste Mindestspannungsschwelle VM1, ist ein ordnungsgemäßes Starten der zweiten Steuereinheit 42 sichergestellt, wenn die gemeinsame Versorgungsspannung VCC größer ist als die erste Mindestspannungsschwelle VM1.

Insgesamt kann daher sichergestellt werden, dass wenn die erste Steuereinheit 40 in ihren Aktivzustand übergeht, auch die zweite Steuereinheit 42 und ggf. weitere nicht gezeigte Steuereinheiten, in einen definierten, bekannten Aktivzustand übergehen.

Figur 3 zeigt eine bevorzugte Ausführungsform eines Verfahrens zum Steuern einer Schaltvorrichtung. Dabei werden zuerst (Schritt 60) eine erste und eine zweite Steuereinheit 40, 42 bereitgestellt, die mit einer gemeinsame Versorgungsspannung VCC elektrisch verbunden sind und die dafür ausgebildet sind, über mindestens einen Kommunikationskanal 44 miteinander zu kommunizieren.

Danach werden in Abhängigkeit von der gemeinsame Versorgungsspannung VCC bestimmte Einstellungen an den Steuereinheiten 40, 42 vorgenommen. Dies sind im Einzelnen:
a) Einstellen eines Aktivzustands (Schritt 62') bei der ersten Steuereinheit 40, wenn die gemeinsame Versorgungsspannung VCC eine erste Mindestspannungsschwelle VM1 überschreitet (Abfrage 62).
b) Einstellen eines Aktivzustands (Schritt 64') bei der zweiten Steuereinheit 42, wenn die gemeinsame Versorgungsspannung VCC eine zweite Mindestspannungsschwelle VM2 überschreitet (Abfrage 64).
c) Einstellen eines Inaktivzustands (Schritt 66') bei der ersten Steuereinheit 40, wenn die gemeinsame Versorgungsspannung VCC die erste Mindestspannungsschwelle VM1 unterschreitet (Abfrage 66) bzw. die erste Unterspannungsschwelle VU1 unterschreitet.
d) Einstellen eines Inaktivzustands (Schritt 68') bei der zweiten Steuereinheit 42, wenn die gemeinsame Versorgungsspannung VCC die zweite Mindestspannungsschwelle VM2 unterschreitet (Abfrage 68) bzw. die zweite Unterspannungsschwelle VU2 unterschreitet.

Schließlich wird die zweite Steuereinheit 42 durch die erste Steuereinheit 40 zurückgesetzt (Schritt 70), und zwar nachdem bei der ersten Steuereinheit 40 der Aktivzustand eingestellt wurde. Zwar ist es bevorzugt abzuwarten, dass die erste Steuereinheit 40 ihren Aktivzustand tatsächlich erreicht hat, bevor die zweite Steuereinheit 42 zurückgesetzt wird, doch kann das Zurücksetzen der zweiten Steuereinheit 42 auch vorher eingeleitet werden, insbesondere zu dem Zeitpunkt unmittelbar nach dem Überschreiten der ersten Mindestspannungsschwelle VM1.

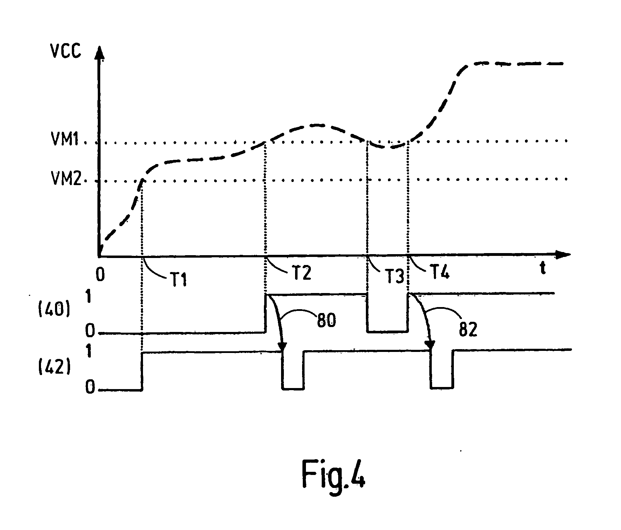

Ein beispielhafter zeitlicher Ablauf, der mittels der Steuereinrichtung 10 bzw. mittels des Verfahrens erzielt wird, ist in der Figur 4 gezeigt. Im oberen Teil der Figur 4 ist ein Diagramm mit einem angenommenen Spannungsverlauf (dicke gestrichelte Linie) in einem Koordinatensystem gezeigt, das entlang der Abszisse die Zeit t und entlang der Ordinate die gemeinsame Versorgungsspannung VCC abgetragen hat.

Unterhalb dieses Diagramms sind die Zustände der ersten Steuereinheit 40, symbolisiert durch "(40)", und der zweiten Steuereinheit 42, symbolisiert durch "(42)", dargestellt. Anhand der Werte "0" und "1" wird angezeigt, ob sich die jeweilige Steuereinheit 40, 42 im Inaktivzustand oder im Aktivzustand befindet. Der Inaktivzustand wird dabei insbesondere als "RESET"-Zustand und der Aktivzustand als "RUN"-Zustand verstanden.

Zum Zeitpunkt t = 0 beträgt VCC = 0. Die Spannung steigt dann an und erreicht zum Zeitpunkt t = T1 die Spannung VCC = VM2. Dies bedeutet, dass die gemeinsame Versorgungsspannung VCC die zweite Mindestspannungsschwelle VM2 der zweiten Steuereinheit 42 erreicht und die zweite Steuereinheit 42 in den Aktivzustand geschaltet wird.

Die gemeinsame Versorgungsspannung VCC steigt weiter an und erreicht zum Zeitpunkt t = T2 den Wert VCC = VM1, d.h. die erste Mindestspannungsschwelle VM1 der ersten Steuereinheit 40. Dadurch wird die erste Steuereinheit 40 in den Aktivzustand geschaltet. Damit sind zum jetzigen Zeitpunkt beide Steuereinheiten 40, 42 aktiv.

Anhand eines Pfeils 80 ist nun symbolisiert, dass die erste Steuereinheit 40, nachdem die erste Mindestspannungsschwelle VM1 überschritten wurde bzw. die erste Steuereinheit 40 in den Aktivzustand geschaltet wurde, bewirkt, dass die zweite Steuereinheit 42 zurückgesetzt wird. Dabei kann das Zurücksetzen wie gezeigt mit einer Verzögerung behaftet sein, aber auch nahezu gleichzeitig erfolgen.

Die zweite Steuereinheit 42 ist hier so ausgebildet, dass sie nach dem Empfang des Signals zum Zurücksetzen, auch RESET-Signal genannt, sich selbst zurücksetzt und dann wieder - die gemeinsame Versorgungsspannung VCC liegt ja oberhalb der zweiten Mindestspannungsschwelle VM2 - in den Aktivzustand übergeht. Damit befinden sich nach einer Weile wieder beide Steuereinheiten 40, 42 im Aktivzustand. Da eine zeitliche Synchronisation zwischen der ersten und der Steuereinheit 40, 42 herbeigeführt wurde, kann nun auch auf einfache Weise eine funktionelle Synchronisation zwischen den Steuereinheiten 40, 42 durchgeführt werden. Da diese Art der Synchronisation deterministisch ist und gut kontrolliert werden kann, ist damit eine hohe Sicherheit beim Zusammenspiel der Steuereinheiten 40, 42 gewährleistet.

Im weiteren Verlauf steigt die gemeinsame Versorgungsspannung VCC noch etwas an und fällt dann zum Zeitpunkt t = T3 unter die erste Mindestspannungsschwelle VM1. Zu diesem Zeitpunkt wird die erste Steuereinheit 40 in den Inaktivzustand geschaltet. Es sei dabei darauf hingewiesen, dass die erste Mindestspannungsschwelle VM1 nicht die technisch mindestens erforderliche Spannung repräsentieren muss. Vielmehr wird die erste Mindestspannungsschwelle VM1 bevorzugt oberhalb der technisch mindestens erforderlichen Spannung gewählt, um ein deterministisches Reagieren der ersten Steuereinheit 40 auf das Unterschreiten der ersten Mindestspannungsschwelle VM1 zu ermöglichen. Da die gemeinsame Versorgungsspannung VCC oberhalb der zweiten Mindestspannungsschwelle VM2 bleibt, verlässt die zweite Steuereinheit 42 ihren Aktivzustand nicht.

Im weiteren Verlauf überschreitet die gemeinsame Versorgungsspannung VCC zum Zeitpunkt t = T4 die erste Mindestspannungsschwelle VM1, so dass die erste Steuereinheit 40 wieder in den Aktivzustand geschaltet wird. Auch hier ist, wie zuvor, mit einem Pfeil 82 angedeutet, dass die Steuereinheit 40 die zweite Steuereinheit 42 zurücksetzt, nachdem die erste Mindestspannungsschwelle VM1 überschritten wurde bzw. die erste Steuereinheit 40 in den Aktivzustand geschaltet wurde. Die zweite Steuereinheit 42 durchläuft wiederum ihren Reset und geht dann wieder in den Aktivzustand über.

Die Erfindung ermöglicht es auf einfache Weise, eine sichere Funktionalität und Synchronisation in einem Multiprozessorsystem bereitzustellen. Sie ermöglicht dies ohne die Verwendung von zusätzlichen Bauteilen, die neben ihren zusätzlichen Kosten und erhöhtem Platzbedarf auch wieder mit zusätzlichem Aufwand in ein Sicherheitskonzept gemäß der Kategorie 3 bzw. der Kategorie 4 gemäß der europäischen Norm EN 954-1 integriert werden müssen.

## Patentansprüche

1. Steuereinrichtung (10) für eine Sicherheitsschaltvorrichtung (18), mit einer ersten Steuereinheit (40) und einer zweiten Steuereinheit (42), die jeweils entsprechend mit einer ersten Versorgungsspannung (VCC1) und einer zweiten Versorgungsspannung (VCC2) elektrisch verbunden sind und dafür ausgebildet sind, über mindestens einen Kommunikationskanal (44) miteinander zu kommunizieren, wobei die erste Versorgungsspannung (VCC1) und die zweite Versorgungsspannung (VCC2) von einer gemeinsamen Ursprungsspannung (U) abgeleitet sind, wobei die erste Steuereinheit (40) dafür ausgebildet ist, in einen Aktivzustand zu gehen, wenn die erste Versorgungsspannung (VCC1) eine erste Mindestspannungsschwelle (VM1) überschreitet, und wobei die zweite Steuereinheit (42) dafür ausgebildet ist, in einen Aktivzustand zu gehen, wenn die zweite Versorgungsspannung (VCC2) eine zweite Mindestspannungsschwelle (VM2) überschreitet, **dadurch gekennzeichnet, dass** die zweite Mindestspannungsschwelle (VM2) kleiner ist als die erste Mindestspannungsschwelle (VM1), wobei die erste Steuereinheit (40) dafür ausgebildet ist, nach dem Überschreiten der ersten Mindestspannungsschwelle (VM1) die zweite Steuereinheit (42) zurückzusetzen.

2. Steuereinrichtung nach Anspruch 1, wobei die erste Steuereinheit (40) dafür ausgebildet ist, in einen Inaktivzustand zu gehen, wenn die erste Versorgungsspannung (VCC1) eine erste Unterspannungsschwelle unterschreitet (VU1).

3. Steuereinrichtung nach Anspruch 1 oder 2, wobei die erste Unterspannungsschwelle (VU1) gleich der ersten Mindestspannungsschwelle (VM1) ist.

4. Steuereinrichtung nach einem der vorhergehenden Ansprüche, wobei die erste Steuereinheit (40) einen ersten Reset-Eingang (46) aufweist, der mit der ersten Versorgungsspannung (VCC1) elektrisch verbunden ist.

5. Steuereinrichtung nach einem der vorhergehenden Ansprüche, wobei die zweite Steuereinheit (42) einen zweiten Reset-Eingang (48) aufweist, die erste Steuereinheit (40) einen ersten Reset-Ausgang (54) aufweist und der zweite Reset-Eingang (48) mit dem ersten Reset-Ausgang (54) elektrisch verbunden ist.

6. Steuereinrichtung nach Anspruch 5, wobei der zweite Reset-Eingang (48) mit der zweiten Versorgungsspannung (VCC2) elektrisch verbunden ist.

7. Steuereinrichtung nach Anspruch 6, wobei der zweite Reset-Eingang (48) zwischen ein erstes Element (50), das wie ein Widerstand wirkt, und ein zweites Element (52), das wie ein Kondensator wirkt, geschaltet ist, wobei das erste Element (50) und das zweite Element (52) in Reihe zwischen der zweiten Versorgungsspannung (VCC2) und einem Massepotential (GND) angeordnet sind.

8. Steuereinrichtung nach einem der vorhergehenden Ansprüche, wobei die erste Versorgungsspannung (VCC1) gleich der zweiten Versorgungsspannung (VCC2) ist.

9. Sicherheitsschaltvorrichtung (18) mit einer Steuereinrichtung (10) nach einem der vorhergehenden Ansprüche.

10. Verwendung einer Steuereinrichtung (10) nach einem der Ansprüche 1 bis 8 zum Steuern einer Sicherheitsschaltvorrichtung (18).

11. Verfahren zum Steuern einer Sicherheitsschaltvorrichtung (18), mit den folgenden Schritten:
- Bereitstellen (60) einer ersten und einer zweiten Steuereinheit (40, 42), die jeweils entsprechend mit einer ersten Versorgungsspannung (VCC1) und einer zweiten Versorgungsspannung (VCC2) elektrisch verbunden sind und dafür ausgebildet sind, über mindestens einen Kommunikationskanal (44) miteinander zu kommunizieren, wobei die erste Versorgungsspannung (VCC1) und die zweite Versorgungsspannung (VCC2) von einer gemeinsamen Ursprungsspannung (U) abgeleitet sind,
- in Abhängigkeit von den Versorgungsspannungen (VCC1, VCC2),
a) Einstellen (62') eines Aktivzustands bei der ersten Steuereinheit (40), wenn die erste Versorgungsspannung (VCC1) eine erste Mindestspannungsschwelle (VM1) überschreitet (62), und
b) Einstellen (64') eines Aktivzustands bei der zweiten Steuereinheit (42), wenn die zweite Versorgungsspannung (VCC2) eine zweite Mindestspannungsschwelle (VM2) überschreitet (64),
**dadurch gekennzeichnet, dass** die zweite Mindestspannungsschwelle (VM2) kleiner ist als die erste Mindestspannungsschwelle (VM1), wobei die zweite Steuereinheit (42) durch die erste Steuereinheit (40) zurückgesetzt wird, nachdem die erste Mindestspannungsschwelle (VM1) überschritten wurde.

12. Verfahren nach Anspruch 11, wobei die erste Versorgungsspannung (VCC1) gleich der zweiten Versorgungsspannung (VCC2) ist.

## Claims

1. A control device (10) for a safety switching apparatus (18), having a first control unit (40) and a second control unit (42), which are each electrically connected in a corresponding manner to a first supply voltage (VCC1) and to a second supply voltage (VCC2) and are designed to communicate with one another via at least one communication channel (44), wherein the first supply voltage (VCC1) and the second supply voltage (VCC2) are derived from a common source voltage (U), wherein the first control unit (40) is designed to change to an active state when the first supply voltage (VCC1) exceeds a first minimum voltage threshold (VM1), and wherein the second control unit (42) is designed to change to an active state when the second supply voltage (VCC2) exceeds a second minimum voltage threshold (VM2), **characterized in that** the second minimum voltage threshold (VM2) is lower than the first minimum voltage threshold (VM1), wherein the first control unit (40) is designed to reset the second control unit (42) when the first minimum voltage threshold (VM1) is exceeded.

2. The control device as claimed in claim 1, wherein the first control unit (40) is designed to change to an inactive state when the first supply voltage (VCC1) undershoots a first undervoltage threshold (VU1).

3. The control device as claimed in claim 1 or 2, wherein the first undervoltage threshold (VU1) is equal to the first minimum voltage threshold (VM1).

4. The control device as claimed in one of the preceding claims, wherein the first control unit (40) has a first reset input (46) which is electrically connected to the first supply voltage (VCC1).

5. The control device as claimed in one of the preceding claims, wherein the second control unit (42) has a second reset input (48), the first control unit (40) has a first reset output (54), and the second reset input (48) is electrically connected to the first reset output (54).

6. The control device as claimed in claim 5, wherein the second reset input (48) is electrically connected to the second supply voltage (VCC2).

7. The control device as claimed in claim 6, wherein the second reset input (48) is connected between a first element (50), which acts like a resistor, and a second element (52), which acts like a capacitor, wherein the first element (50) and the second element (52) are arranged in series between the second supply voltage (VCC2) and a ground potential (GND).

8. The control device as claimed in one of the preceding claims, wherein the first supply voltage (VCC1) is equal to the second supply voltage (VCC2).

9. A safety switching apparatus (18) having a control device (10) as claimed in one of the preceding claims.

10. The use of a control device (10) as claimed in one of claims 1 to 8 for controlling a safety switching apparatus (18).

11. A method for controlling a safety switching apparatus (18), having the following steps:
- providing (60) a first and a second control unit (40, 42), which are each electrically connected in a corresponding manner to a first supply voltage (VCC1) and to a second supply voltage (VCC2) and are designed to communicate with one another via at least one communication channel (44), wherein the first supply voltage (VCC1) and the second supply voltage (VCC2) are derived from a common source voltage (U),
- as a function of the supply voltages (VCC1, VCC2),
a) setting (62') an active state for the first control unit (40) when the first supply voltage (VCC1) exceeds (62) a first minimum voltage threshold (VM1), and
b) setting (64') an active state for the second control unit (42) when the second supply voltage (VCC2) exceeds (64) a second minimum voltage threshold (VM2), **characterized in that** the second minimum voltage threshold (VM2) is lower than the first minimum voltage threshold (VM1), with the second control unit (42) being resetted by the first control unit (40) once the first minimum voltage threshold (VM1) has been exceeded.

12. The method as claimed in claim 11, wherein the first supply voltage (VCC1) is equal to the second supply voltage (VCC2).

## Revendications

1. Équipement de commande (10) destiné à un dispositif de commutation de sécurité (18), comprenant une première unité de commande (40) et une seconde unité de commande (42) qui sont respectivement électriquement reliées à une première tension d'alimentation (VCC1) et à une seconde tension d'alimentation (VCC2) et qui sont conçues pour communiquer l'une avec l'autre par l'intermédiaire d'au moins un canal de communication (44), dans lequel la première tension d'alimentation (VCC1) et la seconde tension d'alimentation (VCC2) sont dérivées d'une tension de source commune (U), dans lequel la première unité de commande (40) est conçue pour passer dans un état actif lorsque la première tension d'alimentation (VCC1) dépasse un premier seuil de tension minimum (VM1), et dans lequel la seconde unité de commande (42) est conçue pour passer dans un état actif lorsque la seconde tension d'alimentation (VCC2) dépasse un second seuil de tension minimum (VM2), **caractérisé en ce que** le second seuil de tension minimum (VM2) est inférieur au premier seuil de tension minimum (VM1), la première unité de commande (40) étant conçue pour réinitialiser la seconde unité de commande (42) après un franchissement en sens décroissant du premier seuil de tension minimum (VM1).

2. Équipement de commande selon la revendication 1, dans laquelle la première unité de commande (40) est conçue pour passer dans un état inactif lorsque la première tension d'alimentation (VCC1) franchit en sens décroissant un premier seuil de tension inférieur (VU1).

3. Équipement de commande selon la revendication 1 ou 2, dans lequel le premier seuil de tension inférieur (VU1) est égal au premier seuil de tension minimum (VM1).

4. Équipement de commande selon l'une des revendications précédentes, dans lequel la première unité de commande (40) comporte une première entrée de réinitialisation (46) qui est électriquement connectée à la première tension d'alimentation (VCC1).

5. Équipement de commande selon l'une des revendications précédentes, dans lequel la seconde unité de commande (42) comporte une deuxième entrée de réinitialisation (48), la première unité de commande (40) comporte une première sortie de réinitialisation (54) et la seconde entrée de réinitialisation (48) est électriquement reliée à la première sortie de réinitialisation (54).

6. Équipement de commande selon la revendication 5, dans lequel la seconde entrée de réinitialisation (48) est électriquement reliée à la seconde tension d'alimentation (VCC2).

7. Équipement de commande selon la revendication 6, dans lequel la seconde entrée de réinitialisation (48) est connectée entre un premier élément (50) qui fonctionne en tant que résistance et un second élément (52) qui fonctionne en tant que condensateur, le premier élément (50) et le second élément (52) étant disposés en série entre la seconde tension d'alimentation (VCC2) et un potentiel de masse (GND).

8. Équipement de commande selon l'une des revendications précédentes, dans lequel la première tension d'alimentation (VCC1) est égale à la seconde tension d'alimentation (VCC2).

9. Dispositif de commutation de sécurité (18) comprenant un équipement de commande (10) selon l'une des revendications précédentes.

10. Utilisation d'un équipement de commande (10) selon l'une des revendications 1 à 8 pour commander un dispositif de commutation de sécurité (18).

11. Procédé pour commander un dispositif de commutation de sécurité (18), comprenant les étapes suivantes :
Fournir (60) une première et une seconde unités de commande (40, 42) qui sont respectivement électriquement reliées à une première tension d'alimentation (VCC1) et à une seconde tension d'alimentation (VCC2) et qui sont conçues pour communiquer l'une avec l'autre par l'intermédiaire d'au moins un canal de communication (44), dans lequel la première tension d'alimentation (VCC1) et la seconde tension d'alimentation (VCC2) sont dérivées d'une tension de source commune (U),
en fonction des tensions d'alimentation (VCC1, VCC2),
a) faire passer (62') la première unité de commande (40) dans un état actif lorsque la première tension d'alimentation (VCC1) franchit (62) en sens décroissant un premier seuil de tension minimum (VM1), et
b) faire passer (64') la seconde unité de commande (42) dans un état actif lorsque la seconde tension d'alimentation (VCC2) franchit en sens décroissant (64) un second seuil de tension minimum (VM2),
**caractérisé en ce que** le second seuil de tension minimum (VM2) est inférieur au premier seuil de tension minimum (VM1), la seconde unité de commande (42) étant réinitialisée par la première unité de commande (40) après que le premier seuil de tension minimum (VM1) a été franchi en sens décroissant.

12. Procédé selon la revendication 11, dans lequel la première tension d'alimentation (VCC1) est égale à la seconde tension d'alimentation (VCC2).
